# EUROPÄISCHE PATENTSCHRIFT

(11) **EP 2 653 766 B1**
(45) Veröffentlichungstag und Bekanntmachung des Hinweises auf die Patenterteilung: **21.08.2019**
(21) Anmeldenummer: 13162446.2
(22) Anmeldetag: 05.04.2013
(51) Int. Cl.: F16L 21/02, F16L 25/00, E21D 9/00, E21D 11/38, E21B 7/20, E21B 17/08, F16L 1/036, F16L 21/035

(54) **Druckausgleichsring zur Anordnung zwischen zwei Vortriebsrohren eines unterirdischen Rohrvortriebs**
Pressure compensation ring to be mounted between two propulsion tubes of an underground propulsion tubing system
Bague d'équilibrage de pression destinée à être agencée entre deux tubes de creusement d'un pousse-tube souterrain

(30) Priorität: 16.04.2012 DE 202012101383 U
(43) Veröffentlichungstag der Anmeldung: 23.10.2013
(73) Patentinhaber: Jackcontrol AG, 8750 Glarus (CH)
(72) Erfinder: Baumgartner, Franz, 78532 Tuttlingen (DE)
(74) Vertreter: Keller & Partner Patentanwälte AG

(56) Entgegenhaltungen:
- EP-A1- 1 413 708
- EP-B1- 1 079 064
- WO-A1-2005/080753
- DE-B- 1 079 091

## Beschreibung

Die Erfindung betrifft einen Druckausgleichsring mit den Merkmalen des Oberbegriffs des Anspruchs 1. Der Druckausgleichsring ist zur Anordnung zwischen zwei einander zugewandten Stirnringflächen zweier Vortriebsrohre für einen unterirdischen Rohrvortrieb vorgesehen.

Vortriebsrohre für einen unterirdischen Rohrvortrieb weisen typischerweise einen kreisförmigen Querschnitt auf, so dass auch der Druckausgleichsring typischerweise ein Kreisring ist. Nicht ausgeschlossen sind andere Rohrquerschnitte und eine entsprechende Ringform des Druckausgleichsrings.

Zu einem unterirdischen Rohrvortrieb werden als Vortriebsrohre bezeichnete Rohre auf Stoß angeordnet, und typischerweise, allerdings nicht zwingend, hydraulisch in Erdreich gepresst. Um Beschädigungen oder eine Zerstörung der Rohre zu vermeiden, werden zwischen den einander zugewandten Stirnringflächen der Vortriebsrohre Druckausgleichsringe beispielsweise aus Holz angeordnet. Die Druckausgleichsringe verringern örtlich hohe Druckspannungen und verteilen diese mehr oder weniger weit in Umfangsrichtung.

Das europäische Patent EP 1 079 064 B1 offenbart einen derartigen Druckausgleichsring aus einem Elastomer, der eine Mehrzahl von Druckübertragungselementen aufweist, die mit Abstand zueinander in einer gemeinsamen Radialebene angeordnet sind. Die Druckübertragungselemente sind konzentrische Ringe oder sich radial erstreckende und in Umfangsrichtung nebeneinander angeordnete Elemente.

Das Gebrauchsmuster DE 296 14 582 U1 offenbart einen Holz/Elastomer-Verbundring als Druckausgleichsring mit einem Holzring als Stützring, dessen Außenumfang von einem Elastomerring eingefasst ist, der einen U-förmigen Ringquerschnitt aufweist und Stirnseiten des Holzrings in einem radial äußeren Bereich bedeckt.

Aufgabe der Erfindung ist eine Weiterentwicklung eines gattungsgemäßen Druckausgleichsrings aus einem Elastomer.

Diese Aufgabe wird erfindungsgemäß durch die Merkmale des Anspruchs 1 gelöst. Der erfindungsgemäße Druckausgleichsring setzt sich zusammen aus zwei funktionalen Komponenten, einem Druckring und einem Manschettenring. Der Druckring überträgt Druckkräfte zwischen zwei einander zugewandten Stirnringflächen zweier Vortriebsrohre bei einem unterirdischen Rohrvortrieb und verringert dabei, wie im Stand der Technik, örtlich hohe Druckspannungen und verteilt sie zumindest ein Stück weit in Umfangsrichtung. Des Weiteren weist der erfindungsgemäße Druckausgleichsring einen umlaufenden Manschettenring radial innen und/oder radial außen am Druckring auf. Vorzugsweise weist der erfindungsgemäße Druckausgleichsring zwei umlaufende Manschettenringe auf, je einen radial innen und einen radial außen am Druckring. Die Manschettenringe weisen einen beispielsweise C- oder U-förmigen Ringquerschnitt auf, wobei eine offene Seite des Ringquerschnitts vom Druckring verschlossen ist, so dass die Manschettenringe umlaufende Schläuche mit geschlossenem Ringquerschnitt bilden. Denkbar sind auch Manschettenringe mit geschlossenem Ringquerschnitt, die radial innen und/oder radial außen am Druckring angeordnet sind.

Die Manschettenringe bestehen wie der Druckring insgesamt aus einem Elastomer und sie sind vorzugsweise einstückige Bestandteile des Druckausgleichsrings.

Die Manschettenringe dienen als Schmutzbarrieren gegen Eindringen von Erde, Steinen, Schlamm und sonstigem zwischen Stirnseiten des Druckausgleichsrings und an den Stirnseiten des Druckausgleichsrings anliegenden Stirnringflächen der Vortriebsrohre.

Möglich, allerdings nicht zwingend ist eine Dichtwirkung der Manschettenringe gegen Flüssigkeiten und/oder Gase zwischen den Vortriebsrohren, wobei eine Abdichtung nicht absolut hermetisch dicht sein muss, sondern Leckage akzeptabel sein kann. Eine Abdichtung zwischen Vortriebsrohren wird vielfach mit einem Dichtring an anderer Stelle bewirkt, weswegen eine Fluiddichtigkeit der Manschettenringe des erfindungsgemäßen Druckausgleichsrings nicht zwingend ist. Im Vordergrund steht die erläuterte Funktion als Barriere gegen Reibung und Verschleiß verursachende Medien wie Erde, Steine, Schlamm usw.

Die Manschettenringe dienen auch dazu, dem Druckring beim Zusammengedrückt werden eine Verbreiterung nach radial innen und außen zu ermöglichen ohne direkten Kontakt mit den Stirnringflächen der Vortriebsrohre, so dass auf den Stirnringflächen der Vortriebsrohre die Zugspannungen durch die Verbreiterung des Druckrings reduziert werden.

Dazu kommt die Funktion der radial innen- und/oder radial außen umlaufenden Manschettenringe des erfindungsgemäßen Druckausgleichsrings als ein Schmiermittelreservoir: Der Manschettenring kann ein Schmiermittel zur Reibungs- und Verschleißminderung aufweisen, wenn sich der Druckausgleichsring bzw. der Druckring bei einer Druckübertragung zwischen Vortriebsrohren auf den Stirnringflächen der Vortriebsrohre verbreitert.

Der Manschettenring bildet eine Art Gleitlager für den Druckring des Druckausgleichsrings: Der Druckring ist innen an Stirnwandungen des Manschettenrings angeordnet, die wiederum an den Stirnringflächen der Vortriebsrohre anliegen. In radialer Richtung gesehen ist der Druckring nur an einer Stelle mit dem Manschettenring verbunden, im weiteren Verbindungssteg genannt, so dass im Übrigen der Druckring gegenüber den Stirnwandungen des Manschettenrings verschiebbar ist. Beim unterirdischen Rohrvortrieb wird der Druckring zwischen den beiden Vortriebsrohren axial elastisch zusammengedrückt und dehnt sich infolgedessen radial nach innen und nach außen aus. Radial fixiert ist der Druckring nur an der Stelle des Verbindungsstegs, im Übrigen kann er radial auf der Innenseite der Stirnwandungen des Manschettenrings gleiten, wodurch ein Schubausgleich gegeben ist

Vorzugsweise befindet sich die als Verbindungssteg bezeichnetet Verbindungsstelle radial gesehen ungefähr in einer Mitte von Stirnringflächen des Druckrings, so dass sich der Druckring beim axialen Zusammendrücken im gleichen Maße radial nach innen und nach außen auf der Innenseite der Stirnwandungen der Manschettenring dehnen kann.

Eine Ausgestaltung der Erfindung sieht bei entspanntem, nicht gepresstem Druckausgleichsring radial innen und radial außen vom Verbindungssteg einen Zwischenraum zwischen dem Druckring und dem Manschettenring vor. Im Zwischenraum befindet sich ein Schmiermittel, das die Reibung zwischen Druckring und Manschettenring herabsetzt und dadurch die vorstehend erörterte Radialdehnung des Druckrings erleichtert. Eine Belastbarkeit des Druckausgleichsrings wird dadurch erhöht. Der Verbindungssteg erhöht außerdem die Andruckkraft der Stirnwandungen des Manschettenrings gegen die Stirnringflächen der Vortriebsrohre und verbessert eine Abdichtung der Vortriebsrohre am Stoß.

Eine Ausgestaltung der Erfindung sieht vor, dass ein freier, nicht vom Druckring eingenommener Innenraum des Manschettenrings mindestens so groß ist, dass bei maximalem axialen Zusammendrücken des Druckrings der sich dabei radial nach innen und nach außen ausdehnende Druckring aufgenommen werden kann. Maximal zusammengedrückt ist der Druckausgleichsring bei maximaler Presskraft beim unterirdischen Rohrvortrieb. Als maximale Presskraft kann stattdessen auch die Kraft angesehen werden, die die Vortriebsrohre zerstört. Der Druckausgleichsring ist insbesondere so ausgelegt, dass er dieser Presskraft standhält, d. h. die Vortriebsrohre bersten vor dem Druckausgleichsring. Vorzugsweise ist der Manschettenring so groß, dass der Druckring nicht innen und/oder außen an einer Umfangswandung des Manschettenrings zur Anlage kommt. Dadurch entstehen - radial innen und außen vom Druckring - Freiräume im Innern des Manschettenrings. Im Bereich dieser Freiräume kann sich der Manschettenring infolgedessen besser bzw. freier an die Stirnringflächen der Vortriebsrohre anlegen. Das verbessert die Funktion des Manschettenrings als Barriere gegen eindringenden Schmutz und ggf. ihre Dichtfunktion.

Eine Ausgestaltung der Erfindung sieht vor, dass der Druckring zwei planparallele Ringstirnflächen parallel zu den Stirnringflächen der Vortriebsrohre aufweist.

Eine Ausgestaltung der Erfindung sieht vor, dass eine radial innere und/oder radial äußere Umfangsfläche des Druckrings kreisbogenförmige Mantellinien aufweist. Diese Querschnittsform weist zumindest rechnerisch eine niedrigste maximale Zugspannung im Kern des Druckübertragungsrings auf, wenn dieser beim unterirdischen Rohrvortriebs zwischen zwei Vortriebsrohren axial zusammengedrückt wird.

Eine Ausgestaltung der Erfindung sieht zwei planparallele Stirnwandungen des Manschettenrings vor parallel zu den Stirnringflächen der Vortriebsrohre.

In bevorzugter Ausgestaltung der Erfindung weist der Manschettenring eine konvexe Umfangswandung, oder als Grenzfall eine Umfangswandung mit geraden Mantellinien auf. Wird der Druckausgleichsring axial zusammengedrückt, vergrößert sich eine Krümmung der konvexen Umfangswandung oder sie knickt bzw. knickt stärker. Durch die Rückstellkraft werden die Stirnwandungen des Manschettenrings am Übergang zur Umfangswandung axial. gegen die Stirnringflächen der Vortriebsrohre, gebogen. Die Barrierefunktion und ggf. Dichtfunktion des Manschettenrings wird dadurch verbessert.

Eine Ausgestaltung der Erfindung sieht vor, dass in axialer Richtung gesehen die Umfangswandung des Manschettenrings in ihrem Mittelbereich dicker ist und zu ihren Stirnwandungen hin dünner wird. Auch diese Ausgestaltung dient dazu, Stirnwandungen des Manschettenrings beim Zusammendrücken des Druckausgleichsrings zwischen zwei Vortriebsrohren beim unterirdischen Rohrvortrieb stärker gegen zugewandte Stirnringflächen der Vortriebsrohre zu drücken.

Ebenfalls dient es einer verbesserten Abdichtung zwischen dem Druckausgleichsring und den Vortriebsrohren, wenn bei einer Ausgestaltung der Erfindung Anlageflächen von Stirnwandungen der Manschettenring an den Stirnringflächen der Vortriebsrohre zwischen dem Druckring und der Umfangswandung des Manschettenrings enden. Das bedeutet, die ringscheibenförmigen Anlageflächen des Manschettenrings an den Stirnringflächen der Vortriebsrohre enden außen am Druckausgleichsring radial innerhalb und innen am Druckausgleichsring radial außerhalb der äußeren und inneren Umfangswandungen des Manschettenrings. Einer axiale Presskraft beim Rohrvortrieb drückt dadurch die Umfangswandungen gegen die Stirnringflächen der Vortriebsrohre, wodurch eine gute Abdichtwirkung zwischen dem Druckausgleichsring und den Vortriebsrohren erzielt wird.

Ebenfalls dient es einer verbesserten Abdichtfunktion, wenn bei einer Ausgestaltung der Erfindung die Anlageflächen (Kontaktflächen) zwischen Stirnwandungen des Manschettenrings und den Stirnringflächen der Vortriebsrohre zwischen dem Druckring und der Umfangswandung des Manschettenrings enden, d.h. im Querschnitt besehen, dass die Breite der Anlagefläche größer ist als die Breite des Druckrings und kleiner ist als die lichte innere Breite des Manschettenrings. Wenn die axiale Presskraft beim Rohrvortrieb den Druckausgleichsring zusammendrückt, federn die konvexen Umfangswandungen des Manschettenrings zurück und erhöhen so den Anpressdruck an die Stirnringflächen der Vortriebsrohre.

Umlaufende Dichtwulste außen an Stirnwandungen des Manschettenrings, wie sie eine Ausgestaltung der Erfindung vorsieht, bilden eine Art umlaufende Dichtungen, die an einer Stirnringflächen der Vortriebsrohre anliegen. Auch diese Dichtwulste sind vorzugsweise außen am Druckausgleichsring radial innerhalb und innen am Druckausgleichsring radial außerhalb von Umfangswandungen des Manschettenrings angeordnet.

Eine Ausgestaltung der Erfindung sieht einen Prüfanschluss vor, der von innen nach außen durch den Druckausgleichsring, also durch den/die Manschettenring/e und den Druckring, durchgeht. Der Prüfanschluss muss mindestens an dem radial außen liegenden Manschettenring dicht anschließen. Der Prüfanschluss ermöglicht ein Prüfen einer Abdichtung des Stoß zwischen zwei Vortriebsrohren außerhalb des Druckübertragungsrings und/oder das Einbringen eines Dichtmittels, vorzugsweise einer elastisch aushärtenden Dichtmasse. Vorzugsweise sind zwei Prüfanschlüsse an gegenüberliegenden Stellen des Druckübertragungsrings vorgesehen, die so zwischen zwei Vortriebsrohren angeordnet werden, dass sich ein Prüfanschluss oben und der andere unten befindet. Die Dichtigkeit lässt sich mit beiden Prüfanschlüssen prüfen, das Einfüllen eines Dichtmittels erfolgt durch den unteren Prüfanschluss, der in diesem Fall auch als Füllanschluss aufgefasst werden kann, während der obere Prüfanschluss zur Entlüftung beim Einfüllen des Dichtmittels dient und auch als Entlüftungsanschluss aufgefasst werden kann.

Eine Ausgestaltung der Erfindung sieht einen Füllanschluss vor, der von innen nach außen in den radial innen liegenden oder in den radial außen liegenden Freiraum zwischen Dichtring und Manschettenring führt. Der Füllanschluss muss dabei am radial innen liegenden bzw. am Druckring dicht anschließen. Der Füllanschluss ermöglicht das Aufpumpen des Freiraums mit Gas, Flüssigkeit, oder elastisch aushärtender Dichtmasse. Dies wird insbesondere dann benötigt, wenn die Stirnflächen der beiden Vortriebsrohre, zwischen denen der Druckausgleichsring eingepresst ist, nicht über den ganzen Umfang parallel zueinander stehen und somit der Druckausgleichsring an einer Stelle stark, an einer anderen aber nur schwach oder gar nicht zusammengepresst wird. Durch das Aufpumpen eines der beiden oder beider Freiräume wird dann die Dichtigkeit zwischen Druckausgleichsring und den Stirnflächen der beiden Vortriebsrohre auf den ganzen Umfang hergestellt. Der aufgepumpte Zustand kann temporär (z.B. für die Dauer einer Dichtigkeitsprüfung) oder dauerhaft sein.

Eine Möglichkeit zur Herstellung des Druckausgleichsrings besteht darin, den Querschnitt des Druckausgleichrings als geraden Strangabschnitt herzustellen und dann zum Ring zu biegen und die Strangenden durch z. B. Kleben oder Vulkanisieren zu verbinden. Um den Strang zu dem Druckausgleichsring biegen zu können oder um das Biegen zu vereinfachen, sieht eine Ausgestaltung der Erfindung Einkerbungen an einem Innen- und/oder einem Außenumfang des Druckausgleichsrings vor. Die Einkerbungen befinden sich an der radial innen liegenden Wand des inneren Manschettenrings und/oder an der radial aussen liegenden Wand des äußeren Manschettenrings. Die Einkerbungen können im Extremfall auch als Einschnitte ausgeführt sein, sie werden vor dem Biegen am Strang angebracht. Im Unterschied zu Einschnitten, die so tief sind, dass sie durch die Wand des Manschettenrings durchgehen und nach dem Biegen des Strangs zum Ring geschlossen werden müssen, sind Einkerbungen weniger tief als eine Wanddicke der Manschettenringe, so dass die Einkerbungen nicht durch die Wand der Manschettenringe durchgehen und die Manschettenringe geschlossen und dicht bleiben. Beim Biegen öffnen sich die Einkerbungen (oder Einschnitte) am Außenumfang und schließen sich die Einkerbungen (oder Einschnitte) am Innenumfang des Druckausgleichsrings. Bei der Ausführung mit Einschnitten werden diese nach dem Biegen beispielsweise. durch Vulkanisieren oder Verkleben wieder verschlossen.

Die Erfindung wird nachfolgend anhand eines in der Zeichnung dargestellten Ausführungsbeispiels näher erläutert. Es zeigen:
Figur 1 einen Achsschnitt eines Druckausgleichsrings gemäß der Erfindung, der zwischen zwei Vortriebsrohren angeordnet ist;
Figur 2 eine abgewandelte Einzelheit des Druckausgleichsrings gemäß II in Fig. 1; und

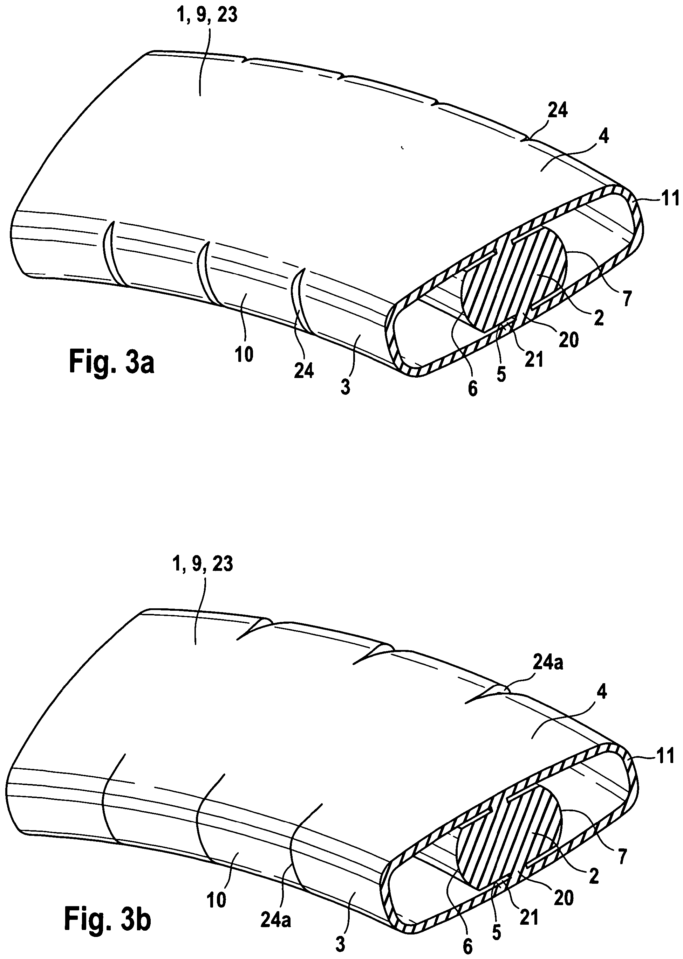

Figur 3a und b die Herstellung des Druckausgleichsrings aus Figur 1 gemäß der Erfingung aus einem Strang.

Der in der Zeichnung dargestellte, erfindungsgemäße Druckausgleichsring 1 weist einen Druckring 2 und zwei Manschettenringe 3, 4 auf, die innen und außen am Druckring 2 angeordnet und mit dem Druckring 2 umlaufend ausgebildet sind. Der Druckring 2 ist einstückig mit den Manschettenringen 3, 4 und besteht wie diese bzw. wie der Druckausgleichsring 1 insgesamt aus einem Elastomer.

Der Druckring 2 weist zwei planparallele Ringstirnflächen 5 in Radialebenen auf. Eine innere und eine äußere Umfangsfläche 6, 7 des Druckrings 2 weisen kreisbogenförmige Mantellinien auf.

Die beiden Manschettenringe 3, 4 weisen U-förmige Ringquerschnitte auf, deren Schenkel planparallele Stirnwandungen 9 in Radialebenen bilden, an deren Innenseiten sich die planparallelen Ringstirnflächen 5 des Druckrings 2 befinden. In unverformtem Grundzustand besteht ein Spalt als Zwischenraum 21 zwischen den Stirnwandungen 9 der Manschettenringe 3, 4 und den ihnen zugewandten und benachbarten Ringstirnflächen 5 des Druckrings 2. In dem Zwischenraum 21 befindet sich ein Schmiermittel, das eine Reibung zwischen den Ringstirnflächen 5 des Druckrings 2 und den Stirnwandungen 9 der Manschettenringe 3, 4 auf einen Bruchteil im Vergleich zu einem nicht geschmierten Zustand verringert.

In radialer Richtung in einer Mitte der Ringstirnflächen 5 geht der Druckring 2 über einen Verbindungssteg 20 einstückig in die Stirnwandungen 9 der Manschettenringe 3, 4 über. Der Druckring 2 und die beiden Manschettenringe 3, 4 sind also einstückig miteinander. Der Verbindungssteg 20 ist ein schmaler Ring in der Mitte der Ringstirnflächen 5 des Druckrings 2. Verbindungsstellen der Stirnwandungen 9 der Schlauchmanschetten 3, 4 und des Druckrings 2 sind schmal im Verhältnis zu einer Breite der Ringstirnflächen 5 des Druckrings 2 Der den Zwischenraum 21 bildende Spalt zwischen den Stirnwandungen 9 der Manschettenringe 3, 4 und den Stirnringflächen 5 des Druckrings 2 schließt sich, wenn der Druckausgleichsring 1 axial zusammengedrückt wird. Die Verbindungsstege 20 drücken die Stirnwandungen 9 ringlinienförmig gegen Stirnringflächen 14 noch zu erläuternder Vortriebsrohre 15, zwischen denen der Druckausgleichsring 1 angeordnet wird, und bewirken eine Abdichtung zwischen den Vortriebsrohren 15 durch den Druckausgleichsring 1.

Die beiden Manschettenringe 3, 4 sind einstückig miteinander und über die Verbindungsstege 20 einstückig mit dem Druckring 2. Die beiden miteinander einstückigen Manschettenringe 3, 4 bilden einen Hüllschlauch, der den Druckring 2 umschließt, wobei radial innen und außen vom Druckring 2 gesehen Freiräume in dem Hüllschlauch bestehen, in die sich der Druckring 2 radial drehen kann, wenn er beim Rohrvortrieb axial gestaucht wird.

Umfangswandungen 10, 11 der Manschettenringe 3, 4 sind ballig konvex gewölbt. Mantellinien der Umfangswandungen 10, 11 der Manschettenringe 3, 4 können kreisbogenförmig sein oder eine andere Wölbung aufweisen oder geradlinig sein. Denkbar ist die konvexe Form der Umfangswandungen 10, 11 auch durch umlaufende Kanten oder Knicke, d. h. Mantellinien sind Polygonzüge (nicht dargestellt). In ihrer axialen Mitte sind die Umfangswandungen 10, 11 der Manschettenringe 3, 4 dicker und werden zu ihren Rändern am Übergang in die Stirnwandungen 9 dünner. An einer Außenseite gehen die Umfangswandungen 10, 11 mit umlaufenden Rundungen in die Stirnwandungen 9 über. Es können auch Fasen, d. h. Schräg- bzw. Konusringflächen, an den Übergängen von den Umfangswandungen 10, 11 in die Stirnwandungen 9 vorgesehen sein (nicht dargestellt).

Der Druckausgleichsring 1 ist an einander zugewandten Stirnringflächen 14 zweier Vortriebsrohre 15 angeordnet, die bei einem unterirdischen Rohrvortrieb mit einer in der Zeichnung nicht sichtbaren hydraulischen Presse in Erdreich gepresst bzw. unterirdisch durch Erdreich durchgepresst werden. Die Stirnwandungen 9 der Manschettenringe 3, 4 liegen an den Stirnringflächen 14 der beiden Vortriebsrohre 15 an.

Der Druckausgleichsring 1 ist mit einer Anzahl gleich- oder ungleichmäßig über den Umfang verteilt angeordneter Stifte 16 an einem der beiden Vortriebsrohre 15 befestigt. Die Stifte 16 stehen nur soweit aus dem Vortriebsrohr 15 vor, dass sie bei axial maximal zusammengedrücktem Druckausgleichsring 1 nicht an der zugewandten Stirnringfläche 14 des anderen Vortriebsrohrs 15 anliegen. Maximal axial zusammengedrückt wird der Druckausgleichsring 1 bei maximalem Pressdruck der hydraulischen Presse beim unterirdischen Rohrvortrieb. Als maximaler Auslegungs-Pressdruck kann ein Berstdruck der Vortriebsrohre 15 angesehen werden, dem der Druckausgleichsring 1 standhalten soll. Beim Berstdruck sollen die Stifte 16 noch nicht an der Stirnringfläche 14 des anderen Vortriebsrohrs 15 zu liegen kommen, damit nicht die Stifte 16 ein Bersten der Vortriebsrohre 15 auslösen.

Beim axialen Zusammendrücken wird der Druckring 2 des Druckausgleichsrings 1 axial zusammengedrückt und dehnt sich infolgedessen radial nach innen und nach außen aus. Die Manschettenringe 3, 4 erstrecken sich radial soweit nach innen bzw. nach außen, dass der Druckring 2 nicht innen gegen die Umfangswandungen 10, 11 der Manschettenringe 3, 4 stößt, wenn er axial maximal zusammengedrückt wird, sondern auch bei maximalem axialem Druck besteht immer noch ein Freiraum zwischen den Umfangsflächen 6, 7 des Druckübertragungsrings 2 und den Umfangswandungen 10, 11 der Manschettenringe 3, 4. Nahe den Umfangswandungen 10, 11 werden die Stirnwandungen 9 der Manschettenringe 3, 4 also auch dann nicht zwischen dem Druckring 2 und den Stirnringflächen 14 der Vortriebsrohre 15 eingespannt, wenn der Druckring 2 axial maximal zusammengedrückt ist.

Bei einem axialen Zusammendrücken des Druckausgleichsrings 1 wird eine Wölbung der konvexen Umfangswandungen 10, 11 der Manschettenringe 3, 4 vergrößert, die Umfangswandungen 10, 11 werden stärker nach innen bzw. nach außen gekrümmt. Anlageflächen der Umfangswandungen 10, 11 der Manschettenringe 3, 4 an den Stirnringflächen 14 der Vortriebsrohre 15 enden mit etwas Radialversatz von den Umfangswandungen 10, 11 der Manschettenringe 3, 4 in Richtung des Druckrings 2. Beides, die konvexen Wölbungen der Umfangswandungen 10, 11 als auch ihr Radialversatz zu den Anlageflächen an den Stirnringflächen 14 der Vortriebsrohre 15 außen am Druckausgleichsring 1 nach außen und innen am Druckausgleichsring 1 nach innen, würde die Stirnwandungen 9 am Übergang zu den Umfangswandungen 10, 11 - wie mit den Strichpunktlinien 17 dargestellt - axial nach außen biegen, wenn die Stirnwandungen 9 freiliegend wären anstatt an den Stirnringflächen 14 der Vortriebsrohre 15 anzuliegen. An den Übergängen der Umfangswandungen 10, 11 zu den Stirnwandungen 9 werden die Manschettenringe 3, 4 dadurch stärker gegen die Stirnringflächen 14 der Vortriebsrohre 15 gedrückt, wodurch eine Barrierewirkung gegen Eindringen von Erde, Steinen, Schlamm und sonstigem zwischen die Stirnwandungen 9 der Manschettenringe 3, 4 und die Stirnringflächen 14 der Vortriebsrohre 15 verbessert wird. Durch das Andrücken der Stirnwandungen 9 der Manschettenringe 3, 4 nahe der Umfangswandungen 10, 11 gegen die Stirnringflächen 14 der Vortriebsrohre 15 wird auch eine Dichtwirkung erzielt, wobei eine Abdichtung an sich mit einem Dichtring 18 an einem der beiden Vortriebsrohre 15 erfolgt, der abdichtend innen an einer rohrförmigen Stahlmanschette 19 anliegt, die fest mit dem anderen Vortriebsrohr 15 verbunden ist und von diesem übersteht und ein Ende des einen Vortriebsrohrs 15 überlappt.

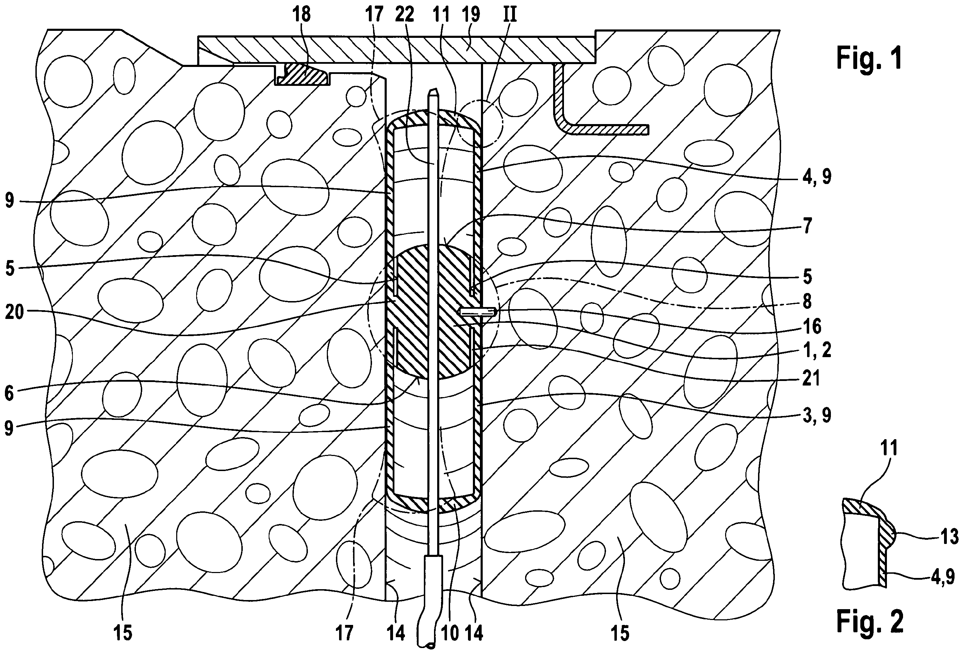

Um die Abdichtung zwischen den Stirnwandungen 9 der Manschettenringe 3, 4 und den Stirnringflächen 14 der Vortriebsrohre 15 und damit die Abdichtung zwischen den Vortriebsrohren 15 zu verbessern, können außen an den Stirnwandungen 9 der Manschettenringe 3, 4 Dichtwulste 13 wie in Figur 2 dargestellt vorgesehen sein. Außer gerundet können die Dichtwulste auch einen dreieckigen, rechteckigen oder trapezförmigen Querschnitt aufweisen oder es sind Dichtlamellen vorgesehen (nicht dargestellt). Die Aufzählung ist beispielhaft und nicht abschließend. Wie zuvor beschrieben sind die Dichtwulste 13 so angeordnet, dass sie radial zu den Umfangswandungen 10, 11 etwas in Richtung des Druckrings 2 versetzt an den Stirnringflächen 14 der Vortriebsrohre 15 anliegen. Die axiale Presskraft beim Rohrvortrieb bewirkt dann wie vorstehend beschrieben ein Kippmoment der Stirnwandungen 9 der Manschettenringe 3, 4 zu den Stirnringflächen 14 der Vortriebsrohre 15 hin und nicht von ihnen weg, wodurch eine gute Abdichtung zwischen dem Druckausgleichsring 1 und den Vortriebsrohren 15 erzielt wird.

Wird der Druckring 2 axial zusammengedrückt und dehnt sich infolgedessen radial nach innen und nach außen aus, gleiten seine Ringstirnflächen 5 auf den Innenseiten der Stirnwandungen 9 der Manschettenringe 3, 4. Um das Gleiten des Druckrings 2 auf den Innenseiten der Stirnwandungen 9 der Manschettenringe 3, 4 zu ermöglichen, ist der Druckring 2 wie oben geschrieben in radialer Richtung gesehen nur in der Mitte seiner Stirnringflächen 5 mit den Stirnwandungen 9 der Manschettenringe 3, 4 verbunden.

Der Druckausgleichring 1 weist einen Prüfanschluss 22 auf, mit dem eine Dichtheit eines den Druckausgleichsring 1 umschließenden Ringraums zwischen dem Druckausgleichsring 1, der Stahlmanschette 19, dem Dichtring 18 und den Ringstirnflächen 5 der Vortriebsrohre 15 prüfen lässt. Der Prüfanschluss 22 weist ein Rohr auf, das durch die innere Umfangswandung 10 der inneren Manschettenring 3, den Druckring 2 und die äußere Umfangswandung 11 der äußeren Manschettenring 4 durchgeht und in den den Druckausgleichsring 1 umschließenden Ringraum mündet. Das Rohr endet mit einer kegelstumpfförmigen Spitze und ist schräg abgeschnitten, wodurch es sich ohne Vorbohren durch den Druckausgleichsring 1 stecken lässt. Innerhalb des Druckausgleichsrings 1 ist ein Schlauch an das Rohr angeschlossen, das Teil des Prüfanschluss 22 ist. Das Rohr dichtet an den Umfangswandungen 10, 11 der Manschettenringe 3, 4 ab.

Außer der Dichtheitsprüfung lässt sich durch den Prüfanschluss 22 ein Dichtmittel, beispielsweise eine elastisch aushärtenden Dichtmasse, in den den Druckausgleichsring 1 umschließenden Ringraum füllen. Dazu sind zwei solche Prüfanschlüsse 22 einander gegenüberliegend vorgesehen. Der Druckausgleichsring 1 wird so angeordnet, dass sich der eine Prüfanschluss 22 oben und der andere Prüfanschluss 22 unten befindet. Das Dichtmittel wird durch den unteren Prüfanschluss 22 in den den Druckausgleichsring 1 umschließenden Ringraum gefüllt, der durch den oberen Prüfanschluss 22 entlüftet wird. In diesem Fall kann der untere Prüfanschluss 22 auch als Füllanschluss und der obere Prüfanschluss 22 als Entlüftung aufgefasst werden.

Zusätzlich zum oder statt dem Prüfanschluss 22 ist auch ein nicht gezeichneter Füllanschluss möglich. Dieser ist an sich ausgebildet und angeordnet wie der gezeichnete Prüfanschluss 22, endet aber im inneren- oder im äußeren Manschettenring 3, 4. Es kann auch für jeden Manschettenring 3, 4 ein Füllanschluss vorhanden sein. Durch den Füllanschluss lassen sich die Manschettenringe mit einem Gas oder einer Flüssigkeit aufpumpen, so dass sie sich dichtend an die Stirnringflächen 14 der Vortriebsrohre 15 anlegen. Auch ein Einfüllen eines elastisch abbindenden Füllmittels in die Manschettenringe 3, 4 ist mit den beschriebenen aber nicht gezeichneten Füllanschlüssen möglich.

Hergestellt ist der Druckausgleichsring 1 aus einem Strang 23, mit dem Querschnitt des Druckausgleichsrings 1. Es wird ein Stück von dem Strang 23 abgeschnitten und zu dem Druckausgleichsring 1 gebogen. Um den Strang 23 zu dem Druckausgleichsring 1 biegen zu können oder um das Biegen zu vereinfachen, werden vor dem Biegen Einkerbungen 24 an einem Innen-und/oder einem Außenumfang des Druckausgleichsrings 1 angebracht. Die Einkerbungen 24 befinden sich an der radial inneren- und/oder äußeren Umfangswandung 10, 11 des Manschettenrings 3, 4. Die Einkerbungen 24 können auch zu Einschnitten 24a vertieft werden. Im äußeren Manschettenring 4 sind die Einschnitte 24a einfache Schnitte, die sich beim Biegen zum Ring dreiecksförmig öffnen, im inneren Manschettenring 3 sind die Einschnitte 24a in axialer Richtung des Druckausgleichsrings 1 gesehen dreicksförmig und schließen oder verengen sich beim Biegen des gerageden Strangs 23 zum Ring. Diese Einschnitte 24a werden nach dem Biegen des Druckausgleichsrings 1 beispielsweise durch Verkleben oder Vulkanisieren wieder verschlossen. Bei Einschnitten am äußeren Manschettenring 4 werden dazu passende Flicken aus vorzugsweise demselben Elastomer wie der Druckausgleichsring 1 einvulkanisiert oder eingeklebt.

## Patentansprüche

1. Druckausgleichsring zur Anordnung zwischen zwei einander zugewandten Stirnringflächen (14) zweier Vortriebsrohre (15) für einen unterirdischen Rohrvortrieb, der einen Druckring (2) aus einem Elastomer aufweist, und der Druckring (2) innen und/oder außen einen umlaufenden Manschettenring (3, 4) aufweist, wobei Stirnringflächen (5) des Druckrings (2) sich innen an Stirnwandungen (9) der Manschettenringe (3, 4) befinden **dadurch gekennzeichnet, dass** die Stirnringflächen in radialer Richtung jeweils nur an einer Stelle (20) mit dem Manschettenring (3, 4) verbunden sind.

2. Druckausgleichsring nach Anspruch 1, **dadurch gekennzeichnet, dass** die Manschettenring (3, 4) einstückig mit dem Druckring (2) ist.

3. Druckausgleichsring nach Anspruch 1, **dadurch gekennzeichnet, dass** der Druckring (2) in radialer Richtung in einer Mitte seiner Stirnringflächen (5) mit dem Manschettenring (3, 4) verbunden ist.

4. Druckausgleichsring nach Anspruch 1 oder 3, **dadurch gekennzeichnet, dass** zwischen den Stirnringflächen (5) des Druckrings (2) und den Stirnwandungen (9) der Manschettenring (3, 4) ein Zwischenraum (21) besteht.

5. Druckausgleichsring nach einem der vorhergehenden Ansprüche, **dadurch gekennzeichnet, dass** ein Innenquerschnitt des Manschettenrings (3, 4) so groß ist, dass er den Druckring (2) aufnehmen kann, wenn er axial maximal zusammengedrückt ist.

6. Druckausgleichsring nach einem der vorhergehenden Ansprüche, **dadurch gekennzeichnet, dass** der Druckring (2) planparallele Ringstirnflächen (5) aufweist.

7. Druckausgleichsring nach einem der vorhergehenden Ansprüche, **dadurch gekennzeichnet, dass** der Druckring (2) Umfangsflächen (6, 7) mit kreisbogenförmigen Mantellinien aufweist.

8. Druckausgleichsring nach einem der vorhergehenden Ansprüche, **dadurch gekennzeichnet, dass** der Manschettenring (3, 4) zwei planparallele Stirnwandungen (9) an Stirnseiten des Druckrings (2) aufweist.

9. Druckausgleichsring nach einem der vorhergehenden Ansprüche, **dadurch gekennzeichnet, dass** die Manschettenring (3, 4) eine konvexe Umfangswandung (10, 11) oder eine Umfangswandung (10) mit geraden Mantellinien aufweist.

10. Druckausgleichsring nach einem der vorhergehenden Ansprüche, **dadurch gekennzeichnet, dass** der Manschettenring (3, 4) einen umlaufenden Dichtwulst (13) an einer Außenseite einer Stirnwandung (9) aufweist.

11. Druckausgleichsring nach einem der vorhergehenden Ansprüche, **dadurch gekennzeichnet, dass** der Druckausgleichsring (1) einen durch den Druckring (2) und die Manschettenringe (3, 4) durchgehenden Prüfanschluss (22) und/oder einen Füllanschluss, der in den radial innen und/oder radial außen liegenden Freiraum zwischen Druckring (2) und Manschettenring (3, 4) führt, aufweist.

12. Druckausgleichsring nach einem der vorhergehenden Ansprüche, **dadurch gekennzeichnet, dass** der Druckausgleichsring (1) aus einem Strang (23) hergestellt ist, der zu dem Druckausgleichsring (1) gebogen ist und der innen und/oder außen Einkerbungen (24) oder Einschnitte (24a) zum Biegen des Strangs (23) aufweist.

## Claims

1. Pressure compensation ring for arrangement between two end ring surfaces (14), facing one another, of two jacking pipes (15) for underground pipe jacking, which has a pressure ring (2) composed of an elastomer, the pressure ring (2) having a peripheral collar ring (3, 4) at the inside and/or outside, wherein end ring surfaces (5) of the pressure ring (2) are situated at the inside at end walls (9) of the collar rings (3, 4), **characterized in that** the end ring surfaces are, in the radial direction, each connected to the collar ring (3, 4) only at one location (20).

2. Pressure compensation ring according to Claim 1, **characterized in that** the collar ring (3, 4) is in one piece with the pressure ring (2).

3. Pressure compensation ring according to Claim 1, **characterized in that** the pressure ring (2) is, in the radial direction, connected at a centre of its end ring surfaces (5) to the collar ring (3,4).

4. Pressure compensation ring according to Claim 1 or 3, **characterized in that** there is an intermediate space (21) between the end ring surfaces (5) of the pressure ring (2) and the end walls (9) of the collar ring (3, 4).

5. Pressure compensation ring according to one of the preceding claims, **characterized in that** an inner cross section of the collar ring (3, 4) is so large that it can receive the pressure ring (2) if it is axially compressed to the maximum extent.

6. Pressure compensation ring according to one of the preceding claims, **characterized in that** the pressure ring (2) has plane-parallel ring end surfaces (5).

7. Pressure compensation ring according to one of the preceding claims, **characterized in that** the pressure ring (2) has peripheral surfaces (6, 7) with arcuate surface lines.

8. Pressure compensation ring according to one of the preceding claims, **characterized in that** the collar ring (3, 4) has two plane-parallel end walls (9) at end sides of the pressure ring (2).

9. Pressure compensation ring according to one of the preceding claims, **characterized in that** the collar ring (3, 4) has a convex peripheral wall (10, 11) or a peripheral wall (10) with straight surface lines.

10. Pressure compensation ring according to one of the preceding claims, **characterized in that** the collar ring (3, 4) has a peripheral sealing bead (13) at an outer side of an end wall (9).

11. Pressure compensation ring according to one of the preceding claims, **characterized in that** the pressure compensation ring (1) has a test connection (22), which passes through the pressure ring (2) and the collar rings (3, 4), and/or a filling connection, which leads into the free space, situated radially at the inside and/or radially at the outside, between the pressure ring (2) and the collar ring (3, 4) .

12. Pressure compensation ring according to one of the preceding claims, **characterized in that** the pressure compensation ring (1) is produced from a strand (23), which is bent to form the pressure compensation ring (1) and which has at the inside and/or at the outside notches (24) or incisions (24a) for the bending of the strand (23).

## Revendications

1. Bague d'équilibrage de pression destinée à être agencée entre deux surfaces frontales annulaires (14), tournées l'une vers l'autre, de deux tubes de creusement (15) d'un pousse-tubes souterrain, qui présente une bague de pression (2) en élastomère, et la bague de pression (2) présentant à l'intérieur et/ou à l'extérieur une bague manchon périphérique (3, 4), des surfaces frontales annulaires (5) de la bague de pression (2) se trouvant à l'intérieur au niveau de parois frontales (9) des bagues manchons (3, 4), **caractérisée en ce que** les surfaces frontales annulaires sont raccordées à la bague manchon (3, 4) à chaque fois seulement à un endroit (20) dans la direction radiale.

2. Bague d'équilibrage de pression selon la revendication 1, **caractérisée en ce que** la bague manchon (3, 4) est réalisée d'une seule pièce avec la bague de pression (2).

3. Bague d'équilibrage de pression selon la revendication 1, **caractérisée en ce que** la bague de pression (2) est connectée dans la direction radiale à la bague manchon (3, 4) au milieu de ses surfaces frontales annulaires (5).

4. Bague d'équilibrage de pression selon la revendication 1 ou 3, **caractérisée en ce qu'**entre les surfaces frontales annulaires (5) de la bague de pression (2) et les parois frontales (9) de la bague manchon (3, 4) est réalisé un espace intermédiaire (21).

5. Bague d'équilibrage de pression selon l'une quelconque des revendications précédentes, **caractérisée en ce qu'**une section transversale intérieure de la bague manchon (3, 4) est suffisamment grande pour pouvoir recevoir la bague de pression (2) lorsqu'elle est comprimée axialement au maximum.

6. Bague d'équilibrage de pression selon l'une quelconque des revendications précédentes, **caractérisée en ce que** la bague de pression (2) présente des surfaces frontales annulaires (5) plan-parallèles.

7. Bague d'équilibrage de pression selon l'une quelconque des revendications précédentes, **caractérisée en ce que** la bague de pression (2) présente des surfaces périphériques (6, 7) avec des génératrices d'enveloppe en forme d'arc de cercle.

8. Bague d'équilibrage de pression selon l'une quelconque des revendications précédentes, **caractérisée en ce que** la bague manchon (3, 4) présente deux parois frontales plan-parallèles (9) au niveau de côtés frontaux de la bague de pression (2).

9. Bague d'équilibrage de pression selon l'une quelconque des revendications précédentes, **caractérisée en ce que** la bague manchon (3, 4) présente une paroi périphérique convexe (10, 11) ou une paroi périphérique (10) avec des génératrices d'enveloppe droites.

10. Bague d'équilibrage de pression selon l'une quelconque des revendications précédentes, **caractérisée en ce que** la bague manchon (3, 4) présente un bourrelet d'étanchéité périphérique (13) au niveau d'un côté extérieur d'une paroi frontale (9).

11. Bague d'équilibrage de pression selon l'une quelconque des revendications précédentes, **caractérisée en ce que** la bague d'équilibrage de pression (1) présente un raccord de contrôle (22) s'étendant à travers la bague de pression (2) et les bagues manchons (3, 4) et/ou un raccord de remplissage qui conduit dans l'espace libre situé radialement à l'intérieur et/ou radialement à l'extérieur entre la bague de pression (2) et la bague manchon (3, 4).

12. Bague d'équilibrage de pression selon l'une quelconque des revendications précédentes, **caractérisée en ce que** la bague d'équilibrage de pression (1) est fabriquée à partir d'un toron (23) qui est cintré pour former la bague d'équilibrage de pression (1) et qui présente des encoches (24) ou des entailles (24a) intérieures et/ou extérieures pour cintrer le toron (23).
